# EUROPÄISCHE PATENTSCHRIFT

(11) **EP 1 505 014 B1**
(45) Veröffentlichungstag und Bekanntmachung des Hinweises auf die Patenterteilung: **15.11.2006**
(21) Anmeldenummer: 03017744.8
(22) Anmeldetag: 04.08.2003
(51) Int. Cl.: B65G 45/16, G06F 17/00

(54) **Lager für Handelsware und Verfahren zur Lagerung von Handelsware**
Storage system and a method of storing goods
Système de stockage et méthode de stockage de merchandises

(43) Veröffentlichungstag der Anmeldung: 09.02.2005
(73) Patentinhaber: IHH Industrie+Handels-Holding Aktiengesellschaft, 49084 Osnabrück (DE)
(72) Erfinder: Vonhoff, Jürgen, 49076 Osnabrück (DE)
(74) Vertreter: Busse & Busse Patentanwälte

(56) Entgegenhaltungen:
- DE-A- 10 017 420
- US-A1- 2002 016 744

## Beschreibung

Die Erfindung betrifft ein Lager nach dem Oberbegriff des Anspruchs 1 und ein Verfahren zur Lagerung von Handelswaren nach dem Oberbegriff des Anspruchs 8. Bei der Lagerung von vielfältigen Waren, wie sie insbesondere im Großhandelsbereich, aber auch im Bereich von Speditionen und sonstigen Dienstleistungen vorkommt, tritt an die Stelle überkommender Lagerstrukturen zunehmend eine weitgehend automatisierte Lagerführung mit einer präzisen Bestandskontrolle und einer flexiblen Platzzuweisung durch ein rechnergestütztes Lagerführungssystem.

Ein solches System ist beispielsweise in der DE-OS 10017420 beschrieben. Die Waren werden automatisch identifiziert, vorzugsweise mit kodierten, lesbaren Identifizierungen und zusammen mit einer gleichfalls automatisch erstellten Kennung für den Lagerplatz mittels Lesegeräten an einem Rechner oder ein System von mehreren Rechnern übermittelt, wo dann die Waren und deren Lagerplatz beliebig aufrufbar gespeichert ist. Dadurch ergibt sich eine effektive Nutzung des Lagers, das nicht zur Wiederauffindbarkeit der Waren in Bereiche aufgeteilt werden muß, die bestimmten Waren oder Warengruppen vorbehalten sind, vielmehr können beliebig gestreute freie Lagerplätze genutzt werden. Die automatische Kennung und Überwachung der Waren erlaubt auch eine Vorratsüberwachung und eine Kontrolle von Verlusten etwa durch Zerstörung und Diebstahl. Der zumindest in der Grundstruktur automatisierte Betrieb der Lagerführung sieht Steuerungsfunktionen und Eingaben von Hand nur noch in Ausnahmefällen vor, wenn sich etwa Randprobleme oder unsystematische Besonderheiten einstellen.

Die nicht mehr nach einem Lagerplan oder dgl. vorzunehmende Gliederung eines Lagers erschwert allerdings das Auffinden von Handelsware mit herkömmlichen Mitteln bzw. ohne einen Insider-Zugang zum rechnergestützten System. Bei den verbreiteten Handels-Liefersystemen mit Zahlungszielen und unter Eigentumsvorbehalt des Lieferanten, bei denen hohe Wertbestände in den Lagern enthalten sind, stellt sich beispielsweise die Frage nach einer Rückholbarkeit von Waren im Krisenfall, insbesondere bei Konkurs eines Großhändlers oder Spediteurs. Auch unabhängig von Folgen eines Unternehmenszusammenbruchs ist der Eigentumsvorbehalt bei (unbezahlten) Waren in automatischen, selbstorganisierten Lagern von der Auffindbarkeit grundsätzlich in Frage gestellt. Daneben ist es für den Lieferanten von Interesse, den Wert und damit das Verlustrisiko an ausgelieferten Waren in einem Lager eines Abnehmers und auch an aus dem Lager herausgegangenen Waren mit Rechnungsstellung gegenüber Dritten überschauen zu können.

Gemäß der Erfindung wird bei einem Lager nach dem Oberbegriff des Anspruchs 1 eine Ausgestaltung nach dem Kennzeichen des Anspruchs 1 vorgesehen. Eine Zusammenstellung der Waren eines einzelnen Lieferanten sondert diese Waren aus einem sonst diffus erscheinenden Lager aus und ermöglicht für den Bedarfsfall ein Herausholen der Waren zur Rückführung oder anderweitigen Weitergabe. Es ermöglicht dem Lieferanten aber auch eine Übersicht über die ihm noch eigenen Waren. Die Ausgabe dieses Bestandes kann in beliebiger Form, so auch in Form gedruckter Listen oder elektronischer Speicherelemente wie etwa Magnetband oder Diskette erfolgen. Vorzugsweise wird die Ausgabe aber innerhalb des Lagerführungssystems zu Abfrage bereitgestellt, so daß ein Abfrager mit Zugangsberechtigung diese Angaben abrufen kann, indem beispielsweise über das Telefonnetz oder das Internet eine Abfrage erfolgt. Solche Abfragen werden bedarfsweise durch eine Zugangskodierung, etwa ein Paßwort oder dgl., zu sichern sein.

Der Bestand kann hinreichend aktuell ermittelt werden, wobei es im allgemeinen ausreicht, täglich, etwa zu einer nächtlichen Arbeitspause, einen Gesamtabgleich im Lager ohne Restunsicherheiten durch momentane Lagerbewegungen durchzuführen.

Der Lieferant kann sich dann laufend über seine Bestände in dem Lager informieren und insbesondere in geschäftlich kritischen Situationen Lieferentscheidungen oder andere geschäftliche Entscheidungen danach ausrichten. Generell wird aber das Geschäftsrisiko des Lieferanten und seine Restunsicherheit in Bezug auf Lieferungen dadurch ganz erheblich eingeschränkt, was auch bei den jeweils vorauszusetzenden Sicherheitsüberlegungen dazuführt, daß ein vertretbares Geschäftsvolumen und ein vorgegebener Kreditrahmen in sehr viel größerem Maße ausgenutzt werden können zum Vorteil aller Beteiligten.

Dazu kann vorteilhaft auch den Waren eine Bewertung zugeordnet werden, die etwa dem Lieferpreis oder auch dem zu erzielenden Erlös im Falle einer Warenrücknahme unter Berücksichtigung aller Beschaffungskosten entspricht.

Die Ausgabe des Bestandes an Waren im Lager kann zweckmäßig ergänzt werden durch eine Erfassung von Waren des jeweiligen Lieferanten, die an Dritte verkauft sind und in diesem Fall regelmäßig mit einer Lieferadresse und einem Rechnungswert verbunden sind, so daß auch weiterveräußerte Waren buchmäßig zu erfassen und bei Eigentumsvorbehalt ggf. zurück zu erlangen oder aber gemäß Rechnungsstellung zu erlösen sind.

Eine solche Bewertung von Außenständen und Risiken kann routinemäßig erfolgen und für den laufenden Betrieb mit einer vorgegebenen Wertgrenze verknüpft werden, bei deren Überschreitung einer Überschreitungsanzeige ausgegeben wird. Diese Wertgrenze, die dem Wert der Waren im Lager und ggf. dem Wert der bereits weiterverkauften Ware gegenüberzustellen ist, stellt einen Rahmen für Lieferbereitschaft des Lieferanten im automatisierten Warenvertrieb dar. Diese Grenze kann allerdings auch in kritischen Fällen bei Risikoanzeichen, etwa Anzeichen für die Überschuldung eines Großhändlers in anderem Zusammenhang oder bei problematischen Absatzbedingungen abgesenkt werden.

Die an den Lieferanten auszugebenden Informationen können sich dann auf Bedarf- und Krisenfälle reduzieren. Bei planmäßigem Geschäftsgang ist lediglich zu melden, daß sich die Daten im vorgegebenen Rahmen halten. Der Lieferant kann dann davon absehen, sich Einzelheiten zu den Waren im Lager oder zu den Werten der gelagerten und der weiterverkauften Waren zu beschaffen.

Die Übersicht über den Verbleib der Waren erweist sich jedenfalls für den Lieferanten als imminent wichtig. In umgekehrter Hinsicht kann der Abnehmer des Lieferanten, insbesondere der Großhändler, in der hier dargestellten Weise gesicherte Informationen bieten und damit ein Vertrauen schaffen, das die geschäftlichen Konditionen und den Geschäftsumgang wesentlich begünstigt. Voraussetzung hierfür ist allerdings ein Lager und auch ein Verfahren zur Lagerung der Handelsware, welches in entsprechender Weise automatisiert und durchorganisiert ist.

Lager herkömmlicher Art mit nur zu einem mehr oder weniger großen Teil maschinell eingegebenen Daten zu den Waren und Lagerplätzen weisen Unsicherheiten hinsichtlich des Verbleibs und des momentanen Aufenthalts von einund ausgehenden Waren oder von umgelagerten Waren sowie von Beschädigungen, Diebstählen und sonstigen "Schwund" auf, die eine Lagerhaltung ungewiß und nur mit wiederkehrenden Revisionen brauchbar machen. Erst eine weitgehend automatisierte Lagerführung, insbesondere eine sich anbietende Lagerführung mit lesbaren Kodierungen für die Ware und die Lagerplätze und mit elektrooptischen Lesegeräten, die laufend alle Bewegungen im Lager an das Lagerführungssystem - vorzugsweise drahtlos - übermitteln, vermag die erforderliche Transparenz und Datensicherheit zu bieten. Die in das Lagersystem einbezogenen Transport-, Förder-, und Handhabungsgeräte sind dazu in inzwischen bewährten Ausführungen, sowohl mit Lesegeräten, wie auch mit Sendern ausgestattet.

## Patentansprüche

1. Lager für Handelsware, insbesondere Großhandelsware, die von Lieferanten bereitgestellt und zum Weitervertrieb gelagert wird, in dem die Handelsware beim Eingang in das Lager und beim Umsetzen zu einem anderen Lagerplatz im Lager mit elektronischen Mitteln identifiziert und einem mit einer elektronischen Kennung versehenen Lagerplatz zugeleitet wird, wobei die Identifizierung der Ware und die Kennung des Lagerplatzes mit Hilfe von Sensorgeräten in ein rechnergestütztes Lagerführungssystem eingegeben werden, **dadurch gekennzeichnet, daß** das Lagerführungssystem den Bestand von Waren zumindest eines einzelnen Lieferanten mit deren Identifizierung und Lagerplatz gesondert von anderen Waren ermittelt und ausgibt und einen Netzanschluß für eine Abfrage des Bestands von außen aufweist, der durch eine Zugangscodierung gesichert ist.

2. Lager nach Anspruch 1, **dadurch gekennzeichnet, daß** das Lagerführungssystem den Bestand in Form gedruckter Listen ausgibt.

3. Lager nach Anspruch 1 oder 2, **dadurch gekennzeichnet, daß** das Lagerführungssystem den Bestand auf einem elektromagnetischen Speicherelement ausgibt.

4. Lager nach einem der Ansprüche 1 bis 3, **dadurch gekennzeichnet, daß** die Ware und die Lagerplätze mit lesbaren Kodierungen versehen sind und daß das Lagerführungssystem beim Betrieb des Lagers laufend mit elektrooptischen Lesegeräten für die Kodierungen verbunden ist.

5. Lager nach Anspruch 4, **dadurch gekennzeichnet, daß** die Lesegeräte zumindest zum Teil per Funk mit dem Lagerführungssystem verbunden sind.

6. Verfahren zur Lagerung von Handelsware, insbesondere Großhandelsware, die von Lieferanten bereitgestellt und zum Weitervertrieb gelagert wird, wobei die Handelsware beim Eingang in das Lager und beim Umsetzen im Lager mit elektronischen Mitteln identifiziert und einem mit einer elektronischen Kennung versehenen Lagerplatz zugeleitet wird, wobei die Identifizierung der Ware und die Kennung des Lagerplatzes mit Hilfe von Sensorgeräten in ein rechnergestütztes Lagerführungssystem eingegeben werden, **dadurch gekennzeichnet, daß** im Lagerführungssystem der Bestand von Waren zumindest eines einzelnen Lieferanten mitsamt Identifizierung der einzelnen Waren und Kennung des Lagerplatzes gesondert ermittelt, zusammengestellt und ausgegeben wird und daß der zumindest täglich aktualisierte Bestand über einen für vorgegebene Benutzer gesicherten elektronischen Netzanschluß bereitgestellt wird.

7. Verfahren nach Anspruch 6, **dadurch gekennzeichnet, daß** dem vom Lagerführungssystem ausgegebenen Bestand eine Bewertung der Waren zugeordnet wird.

8. Verfahren nach einem der Anspruch 6 oder 7, **dadurch gekennzeichnet, daß** die Bestandsausgabe durch eine Aufstellung aus dem Lager verkaufter Handelsware des Lieferanten mit Angaben zu den Empfängern und Rechnungsstellungen ergänzt wird.

9. Verfahren nach Anspruch 7 oder 8, **dadurch gekennzeichnet, daß** die dem Bestand zugeordnete Bewertung der Waren mit einer vorgegebenen Wertgrenze zur Ausgabe einer Überschreitungsanzeige verglichen wird.

## Claims

1. Storage facility for merchandise, in particular wholesale merchandise, which is provided by suppliers and stored for further distribution, in which on entry into the storage facility and on relocation to another storage location within the storage facility, the merchandise is identified with electronic means and is routed to a storage location equipped with an electronic identification key, wherein the identification of the goods and the identification key of the storage location are entered into a computer-assisted storage management system with the aid of sensor devices, **characterised in that** the storage management system determines and outputs the stock of goods for at least one individual supplier with their identification and storage location separately from other goods, and has a mains connection for inquiring about the stock from outside, which is secured via access coding.

2. Storage facility according to claim 1, **characterised in that** the storage management system outputs the stock in the form of printed lists.

3. Storage facility according to claim 1 or 2, **characterised in that** the storage management system outputs the stock on an electromagnetic storage element.

4. Storage facility according to one of the claims 1 to 3, **characterised in that** the goods and the storage locations are equipped with readable codings and that in the operation of the storage facility, the storage management system is continuously connected to electro-optical reader devices for the codings.

5. Storage facility according to claim 4, **characterised in that** the reader devices are connected to the storage management system at least partially by radio.

6. Method for storing merchandise, in particular wholesale merchandise, which is provided by suppliers and stored for further distribution, in which on entry into the storage facility and on relocation to another storage location within the storage facility, the merchandise is identified with electronic means and is routed to a storage location equipped with an electronic identification key, wherein the identification of the goods and the identification key of the storage location are entered into a computer-assisted storage management system with the aid of sensor devices, **characterised in that** in the storage management system, the stock of goods for at least one individual supplier is determined, compiled and output separately together with the identification key of the storage location, and that the stock, which is updated at least daily, is made available via an electronic mains connections that is secured for predetermined users.

7. Method according to claim 6, **characterised in that** the stock that is output by the storage management system has a valuation of the goods assigned to it.

8. Method according to one of the claims 6 or 7, **characterised in that** the stock output is supplemented by a list of merchandise for that supplier that has been sold from the storage facility, with details of the recipients and invoicing.

9. Method according to claim 7 or 8, **characterised in that** the valuation of the goods that is assigned to the stock is compared with a predetermined value limit, in order to output a notice if the limit has been exceeded.

## Revendications

1. Système de stockage de marchandises, en particulier de marchandises en gros, qui sont approvisionnées par des fournisseurs et stockées en vue de leur revente, dans lequel les marchandises sont identifiées par des moyens électroniques lors de leur entrée dans le système de stockage et lors de leur déplacement vers un autre endroit de stockage dans le système de stockage et transférées à un endroit de stockage muni d'un code électronique, dans lequel l'identification des marchandises et le code de l'endroit de stockage sont introduits dans un système de gestion du système de stockage par ordinateur à l'aide d'appareils de détection, **caractérisé en ce que** le système de gestion du système de stockage détermine et émet l'état du stock de marchandises d'au moins un fournisseur individuel avec leur identification et leur endroit de stockage séparément d'autres marchandises et présente une connexion de réseau pour une interrogation du stock à partir de l'extérieur, connexion qui est sécurisée par un code d'accès.

2. Système de stockage selon la revendication 1, **caractérisé en ce que** le système de gestion du système de stockage émet l'état du stock sous la forme d'une liste imprimée.

3. Système de stockage selon la revendication 1 ou 2, **caractérisé en ce que** le système de gestion du système de stockage émet l'état du stock sur un élément de mémoire électromagnétique.

4. Système de stockage selon l'une quelconque des revendications 1 à 3, **caractérisé en ce que** les marchandises et les endroits de stockage sont pourvus de codes lisibles et **en ce que** le système de gestion du système de stockage est raccordé en permanence à des appareils de lecture électro-optiques des codes pendant le fonctionnement du système de stockage.

5. Système de stockage selon la revendication 4, **caractérisé en ce que** les appareils de lecture sont raccordés au moins en partie par radio au système de gestion du système de stockage.

6. Procédé de stockage de marchandises, en particulier de marchandises en gros, qui sont approvisionnées par des fournisseurs et stockées en vue de leur revente, dans lequel les marchandises sont identifiées par des moyens électroniques lors de leur entrée dans le système de stockage et lors de leur déplacement vers un autre endroit de stockage dans le système de stockage et transférées à un endroit de stockage muni d'un code électronique, dans lequel l'identification des marchandises et le code de l'endroit de stockage sont introduits dans un système de gestion du système de stockage par ordinateur à l'aide d'appareils de détection, **caractérisé en ce que** l'on identifie, on rassemble et on émet séparément, dans le système de gestion du système de stockage, l'état do stock de marchandises d'au moins un fournisseur individuel avec l'identification des marchandises individuelles et le code de l'endroit de stockage et **en ce que** l'on propose l'état du stock actualisé au moins chaque jour par une connexion de réseau électronique sécurisée pour des utilisateurs prédéterminés.

7. Procédé selon la revendication 6, **caractérisé en ce qu'**une valorisation des marchandises accompagne l'état du stock émis par le système de gestion du système de stockage.

8. Procédé selon la revendication 6 ou 7, **caractérisé en ce que** l'état du stock est complété par une énumération des marchandises du fournisseur vendues hors du système de stockage avec indication des destinataires et des postes de facturation.

9. Procédé selon la revendication 7 ou 8, **caractérisé en ce que** la valorisation des marchandises accompagnant l'état du stock est comparée avec une limite de valeur prédéterminée pour l'émission d'un avis de dépassement.
